# EUROPEAN PATENT APPLICATION

(11) **EP 4 447 582 A1**
(43) Date of publication of application: **16.10.2024**
(21) Application number: 22914453.0
(22) Date of filing: 21.12.2022
(51) Int. Cl.: H04W 72/04

(54) **RESOURCE SENDING METHOD AND APPARATUS, RELATED DEVICE AND STORAGE MEDIUM**

(30) Priority: 29.12.2021 CN 202111639888
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: DONG, Jing, Beijing 100053 (CN); WANG, Qixing, Beijing 100053 (CN); LIU, Guangyi, Beijing 100053 (CN)
(74) Representative: J A Kemp LLP
(86) International application number: PCT/CN2022/140713
(87) International publication number: WO 2023/125199

(57) **Abstract**

Disclosed in the present application are a resource sending method and apparatus, a terminal, a first access network device, and a storage medium. The method comprises: a terminal receiving first information from a first access network device, wherein the first access network device can provide access to the terminal in a first mode; the first information comprises at least one of the following: second information indicating an association relationship between a first signal of a first mode and a second signal of a second mode, a second access network device providing access to the terminal in the second mode, and the first mode being different from the second mode; configuration information of a random access resource of the second mode; third information indicating an association relationship between the random access resource of the second mode and the second signal of the second mode; a random access sequence format of the second mode; determining a first random access resource mapped by the second signal of the second mode and a corresponding sending beam on the basis of the first information, and sending random access request information of the second mode to the first access network device.

## Description

### CROSS-REFERENCE TO RELATED APPLICATIONS

This application is based upon and claims priority to Chinese Patent Application No. 202111639888.X filed on December 29, 2021, the entire contents of which are incorporated herein by reference.

### TECHNICAL FIELD

The disclosure relates to the field of wireless communications, and particularly to a method for sending a resource, a related device, and a storage medium.

### BACKGROUND

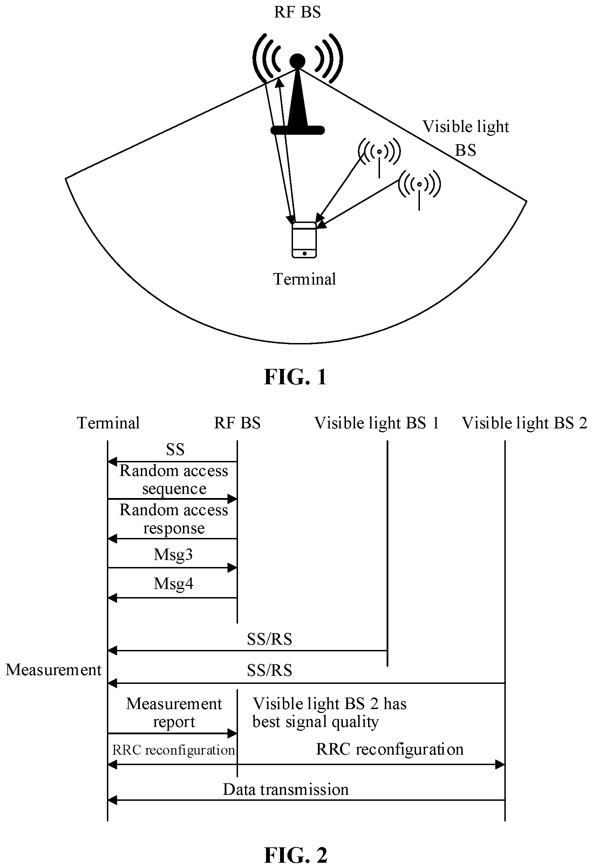

Indoor visible light communication (VLC) transmits information using high-speed flicker of a light-emitting diode (LED) light, with free space as a transmission channel, and is a new type of high-speed and environmentally friendly indoor access network technology. As a light source, the LED light emits light that is to some extent directional, resulting in a small VLC coverage, and a service may be interrupted when a user moves beyond the VLC coverage. On the other hand, compared to penetrativity of wireless communication, the VLC is susceptible to interruption of a communication link with impact of an obstruction. In addition, given difficulty in implementation of a visible light uplink in actual application, heterogeneous networking may be implemented by combining the VLC with another mode of wireless access. Taking radio frequency (RF) as an example, as shown in FIG. 1, in heterogeneous networking with the VLC, it is assumed that there is just a visible light downlink with no visible light uplink, and there are both an RF uplink and an RF downlink.

However, in heterogeneous networking, there is a pressing need for fast downlink access while lowering an initial access delay.

### SUMMARY

In view of problems in related art, embodiments of the disclosure provide a method for sending a resource, a related device, and a storage medium.

Technical solutions according to embodiments of the disclosure are implemented as follows.

Embodiments of the disclosure provide a method for sending a resource. The method is implemented by a terminal. The method includes operations as follows.

First information sent by a first access network device is received. The first access network device is configured to provide the terminal with access of a first mode. A first random access resource to which a second signal of a second mode is mapped and a corresponding sending beam are determined based on the first information. Random access request information for requesting random access of the second mode is sent to the first access network device.

The first information includes at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

In the solution, access of the first mode includes radio frequency (RF) access.

In the solution, access of the second mode includes optical communication access.

In the solution, the first random access resource to which the second signal of the second mode is mapped and the corresponding sending beam are determined based on the first information as follows.

A mapping result is acquired by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The first random access resource and the corresponding sending beam are determined based on the mapping result.

In the solution, the first random access resource to which the second signal of the second mode is mapped and the corresponding sending beam are determined based on the first information as follows.

A mapping result is acquired by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The first random access resource and the corresponding sending beam are determined based on the mapping result.

In the solution, when one second signal of the second mode is enabled to correspond to at least two first signals of the first mode, the association between the first signal of the first mode and the second signal of the second mode as indicated by the second information indicates that the one second signal of the second mode corresponds to just one first signal of the first mode.

In the solution, the random access request information for requesting random access of the second mode includes:
the random access sequence of the second mode; or
the random access sequence of the second mode and a physical uplink shared channel (PUSCH) or a physical uplink control channel (PUCCH) associated with the random access sequence of the second mode.

In the solution, the method further includes operations as follows.

Fourth information sent by the first access network device is received. The fourth information indicates whether access of the second mode is enabled.

When the fourth information indicates that access of the second mode is enabled, the first random access resource to which the second signal of the second mode is mapped and the corresponding sending beam are determined based on the first information. The random access request information for requesting random access of the second mode is sent to the first access network device.

Embodiments of the disclosure further provide a method for sending a resource. The method is implemented by a first access network device. The method includes operations as follows.

First information is sent to a terminal. The first access network device is configured to provide the terminal with access of a first mode.

Random access request information for requesting random access of a second mode is received. The random access request information for requesting random access of the second mode is sent by the terminal through a beam corresponding to a first signal of the first mode on a first random access resource to which a second signal of the second mode is mapped. A second access network device to be accessed by the terminal is determined based on at least one of a location of the first random access resource to which the second signal of the second mode is mapped or the random access request information for requesting random access of the second mode. The second access network device is configured to provide the terminal with access of the second mode.

The first information includes at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

In the solution, access of the first mode includes radio frequency (RF) access.

In the solution, access of the second mode includes optical communication access.

In the solution, the second access network device to be accessed by the terminal is determined based on at least one of the location of the first random access resource to which the second signal of the second mode is mapped or the random access request information for requesting random access of the second mode, as follows.

A mapping result is acquired by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second access network device to be accessed by the terminal is determined based on at least one of the location of the first random access resource or the random access request information for requesting random access of the second mode, and the mapping result.

In the solution, the second access network device to be accessed by the terminal is determined based on at least one of the location of the first random access resource to which the second signal of the second mode is mapped or the random access request information for requesting random access of the second mode, as follows.

A mapping result is acquired by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second access network device to be accessed by the terminal is determined based on at least one of the location of the first random access resource or the request information for requesting random access of the second mode, and the mapping result.

In the solution, when one second signal of the second mode is enabled to correspond to at least two first signals of the first mode, the association between the first signal of the first mode and the second signal of the second mode as indicated by the second information indicates that the one second signal of the second mode corresponds to just one first signal of the first mode.

In the solution, the random access request information for requesting random access of the second mode includes:
the random access sequence of the second mode; or
the random access sequence of the second mode and a physical uplink shared channel (PUSCH) or a physical uplink control channel (PUCCH) associated with the random access sequence of the second mode.

In the solution, the method further includes operations as follows.

Fourth information is sent to the terminal. The fourth information indicates whether access of the second mode is enabled.

Embodiments of the disclosure further provide an apparatus for sending a resource. The apparatus includes a receiving unit and a first processing unit.

The receiving unit is configured to receive first information sent by a first access network device. The first access network device is configured to provide the terminal with access of a first mode. The first processing unit is configured to determine, based on the first information, a first random access resource to which a second signal of a second mode is mapped and a corresponding sending beam, and send, to the first access network device, random access request information for requesting random access of the second mode.

The first information includes at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

An apparatus for sending a resource in the solution is provided on a first access network device, and includes a sending unit and a second processing unit.

The sending unit is configured to send first information to a terminal. The first access network device is configured to provide the terminal with access of a first mode. The second processing unit is configured to receive random access request information for requesting random access of a second mode. The random access request information for requesting random access of the second mode is sent by the terminal through a beam corresponding to a first signal of the first mode on a first random access resource to which a second signal of the second mode is mapped. The second processing unit is configured to determine a second access network device to be accessed by the terminal based on at least one of a location of the first random access resource to which the second signal of the second mode is mapped or the random access request information for requesting random access of the second mode. The second access network device is configured to provide the terminal with access of the second mode.

The first information includes at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

A terminal in the solution includes a first processor and a first communication interface.

The first communication interface is configured to receive first information sent by a first access network device. The first access network device is configured to provide the terminal with access of a first mode. The first processor is configured to determine, based on the first information, a first random access resource to which a second signal of a second mode is mapped and a corresponding sending beam, and send, to the first access network device through the first communication interface, random access request information for requesting random access of the second mode.

The first information includes at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

An access network device in the solution includes a second processor and a second communication interface.

The second communication interface is configured to send first information to a terminal, and receive random access request information for requesting random access of a second mode. The random access request information for requesting random access of the second mode is sent by the terminal through a beam corresponding to a first signal of a first mode on a first random access resource to which a second signal of the second mode is mapped. The access network device is configured to provide the terminal with access of the first mode.

The second processor is configured to determine a second access network device to be accessed by the terminal based on at least one of a location of the first random access resource to which the second signal of the second mode is mapped or the random access request information for requesting random access of the second mode. The second access network device is configured to provide the terminal with access of the second mode.

The first information includes at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

Embodiments of the disclosure further provide a terminal. The terminal includes a first processor and a first memory storing a computer program executable by a processor.

The first processor is configured to implement operations of any one method at the terminal side when executing the computer program.

Embodiments of the disclosure further provide an access network device. The access network device includes a second processor and a second memory storing a computer program executable by a processor.

The second processor is configured to implement operations of any one method at the first access network device side when executing the computer program.

Embodiments of the disclosure further provide a storage medium having stored thereon a computer program. When executed by a processor, the computer program implements operations of any one method at the terminal side, or implements operations of any one method at the first access network device side.

With a method for sending a resource, a related device, and a storage medium according to embodiments of the disclosure, a first access network device sends first information to a terminal. The first access network device is configured to provide the terminal with access of a first mode. The first information includes at least one of second information, a configuration of a random access resource of a second mode, third information, or a format of a random access sequence of the second mode. The second information indicates an association between a first signal of the first mode and a second signal of the second mode. The first mode differs from the second mode. The third information indicates an association between the random access resource of the second mode and the second signal of the second mode. Having received the first information, the terminal determines a first random access resource to which the second signal of the second mode is mapped and a corresponding sending beam based on the first information, and sends, to the first access network device random access, request information for requesting random access of the second mode. Having received the random access request information, the first access network device determines a second access network device to be accessed by the terminal based on at least one of the location of the first random access resource or the random access request information. The second access network device is configured to provide the terminal with access of the second mode. With the solutions according to embodiments of the disclosure, an access network device of a first mode sends information to a terminal, enabling the terminal to establish a mapping relation among a random access resource of a second mode, a second signal of the second mode, and a first signal of the first mode, thereby enabling the terminal to select the random access resource of the second mode and a most suitable sending beam, and to send corresponding random access request information, thus enabling the access network device of the first mode to identify an access network device of the second mode the terminal is to access, as well as enabling reception using a most suitable uplink beam, thereby reducing an initial access delay, increasing an access flow rate.

### BRIEF DESCRIPTION OF THE DRAWINGS

FIG. 1 is a diagram of a heterogeneous network composed of VLC and RF.
FIG. 2 is a flowchart of initial access of the heterogeneous network composed of VLC and RF.
FIG. 3 is another flowchart of initial access of the heterogeneous network composed of VLC and RF.
FIG. 4 is a flowchart of a method for sending a resource according to an embodiment of the disclosure.
FIG. 5 is a flowchart of another method for sending a resource according to an embodiment of the disclosure.
FIG. 6 is a flowchart of a third method for sending a resource according to an embodiment of the disclosure.
FIG. 7 is a diagram of a mapping relation according to an application embodiment of the disclosure.
FIG. 8 is a diagram of a second mapping relation according to an application embodiment of the disclosure.
FIG. 9A to FIG. 9C are each a diagram of a third mapping relation according to application embodiments of the disclosure.
FIG. 10 is a diagram of a fourth mapping relation according to an application embodiment of the disclosure.
FIG. 11 is a diagram of a fifth mapping relation according to an application embodiment of the disclosure.
FIG. 12A to FIG. 12C are each a diagram of a sixth mapping relation according to application embodiments of the disclosure.
FIG. 13 is a diagram of a structure of an apparatus for sending a resource according to an embodiment of the disclosure.
FIG. 14 is a diagram of a structure of another apparatus for sending a resource according to an embodiment of the disclosure.
FIG. 15 is a diagram of a structure of a terminal according to an embodiment of the disclosure.
FIG. 16 is a diagram of a structure of an access network device according to an embodiment of the disclosure.
FIG. 17 is a diagram of a structure of a system for sending a resource according to an embodiment of the disclosure.

### DETAILED DESCRIPTION

The disclosure is further elaborated hereinafter with reference to the drawings and embodiments.

Taking heterogeneous networking as illustrated in FIG. 1, as shown in FIG. 2, having been powered on, the terminal first accesses an RF base station (BS) by performing a series of flows such as synchronization, random access, etc., through an RF uplink and an RF downlink. Then, the terminal measures quality of a receivable synchronization signal (SS) or reference signal (RS) sent by any visible light BS, and reports a measurement result to the RF BS through the RF uplink. The RF BS selects a visible light BS of best quality and adds the visible light BS through radio resource control (RRC) reconfiguration. Given that there is no visible light uplink in the heterogeneous networking system, the terminal communicates with the visible light BS directly without having to perform uplink synchronization through a random access process.

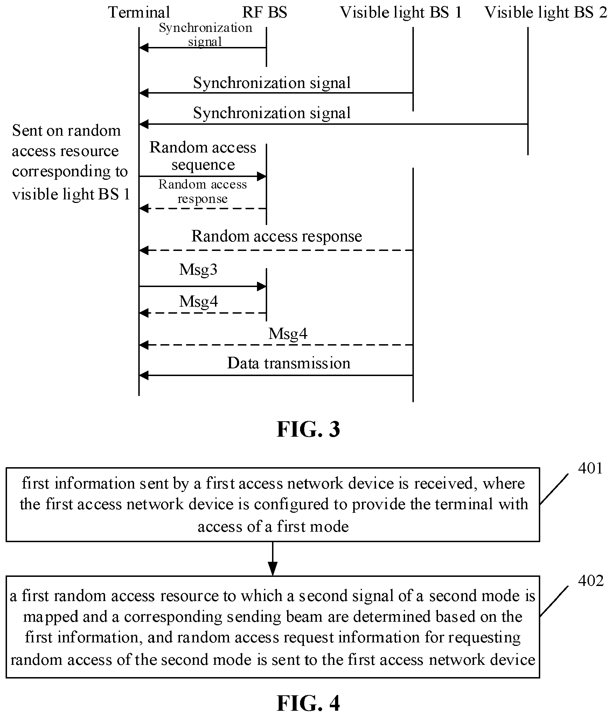

However, as shown by the flow illustrated in FIG. 2, in the flow of initial access of heterogeneous networking with visible light, to access a visible light BS, the terminal has to first access the RF BS, report measured quality of all visible light downlinks to the RF BS, and then add, through the RF BS, a suitable visible light BS to communicate with. This process is lengthy. Therefore, as shown in FIG. 3, the terminal may select and access a visible light downlink directly in an RF access stage, thus skipping the flow of measurement report and reconfiguration by the RF BS, thereby reducing an initial access delay, increasing an access flow rate.

In the flow of initial access of heterogeneous networking, after the terminal has received SS/physical broadcast channel (PBCH) blocks (SS/PBCH blocks, SSBs) sent by the RF downlink and a visible light downlink, there is yet any effective solution for selecting a corresponding physical random access channel (PRACH) transmission resource that allows not only the RF BS to identify a visible light BS the terminal is to access, but also reception with a most suitable uplink beam.

In view of this, in various embodiments of the disclosure, an access network device of a first mode sends information to a terminal, enabling the terminal to establish a mapping relation among a random access resource of a second mode, a second signal of the second mode (which may be referred to as SS), and a first signal of the first mode (which may be referred to as SS), thereby enabling the terminal to select the random access resource of the second mode and a most suitable sending beam, and to send corresponding random access request information, thus enabling the access network device of the first mode to identify an access network device of the second mode the terminal is to access, as well as enabling reception using a most suitable uplink beam, thereby reducing an initial access delay, increasing an access flow rate.

Embodiments of the disclosure provide a method for sending a resource. The method is implemented by a terminal. As shown in FIG. 4, the method includes operations as follows.

In 401, first information sent by a first access network device is received. The first access network device is configured to provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode. A second access network device is configured to provide the terminal with access of the second mode. The first mode differs from the second mode.

The third information indicates an association between the random access resource of the second mode and the second signal of the second mode.

The random access sequence of the second mode may also be referred to as a preamble.

In 402, a first random access resource to which the second signal of the second mode is mapped and a corresponding sending beam are determined based on the first information. Random access request information for requesting random access of the second mode is sent to the first access network device.

In application, the terminal may be referred to as a user equipment (UE), a terminal device, a device, a user, or the like.

The first access network device and the second access network device form a heterogeneous network. The first access network device may be referred to as a master node (MN). Accordingly, the second access network device may also be referred to as a secondary node (SN).

In an embodiment, access of the first mode includes radio frequency (RF) access.

In an embodiment, access of the second mode includes optical communication access, and may specifically be VLC access (also referred to as visible light access). That is, the first access network device may provide the terminal with RF access, and the second access network device may provide the terminal with VLC access. Accordingly, the first access network device may include an RF access point (AP) (which may also referred to as an RF BS), and the second access network device may include a VLC AP (which may also referred to as a visible light BS).

The terminal may receive, through an RF downlink, data and control information sent by the first access network device. Accordingly, the terminal may send, through an RF uplink, at least one of: data; or feedback information of the data, i.e., hybrid automatic repeat request (HARQ)-ACK information. In this case, the terminal is located in the heterogeneous network composed of VLC and RF. In the heterogeneous network, heterogeneous networking refers to that a VLC downlink (which may also be referred to as a visible light downlink), the RF uplink, and the RF downlink may be enabled as needed.

The association between the first signal of the first mode and the second signal of the second mode, which may also be referred to as a mapping relation between the first signal of the first mode and the second signal of the second mode, indicates which coverage (coverages) covered by the second signal of the second mode is (are) covered by the first signal of the first mode. Illustratively, in the heterogeneous network composed of VLC and RF, the association between the first signal of the first mode and the second signal of the second mode indicates which visible light SSB coverage (coverages) is (are) covered by an RF SSB.

Here, in application, when one second signal of the second mode is enabled to correspond to at least two first signals of the first mode, to save signalling overhead, the association between the first signal of the first mode and the second signal of the second mode as indicated by the second information indicates that one second signal of the second mode may correspond to just one first signal of the first mode.

The configuration of the random access resource of the second mode may include a PRACH transmission occasion (RO) of the second mode. In application, an RO of the second mode may be separate from an RO of the first mode (i.e., the two ROs differ), or the RO of the second mode may not be separate from the RO of the first mode (i.e., the two ROs are the same). When the RO of the second mode and the RO of the first mode are the same, to save signalling overhead, the configuration of the random access resource of the second mode may be default, representing that by default the configuration of the random access resource of the second mode is the same as a configuration of a random access resource of the first mode.

The association between the random access resource of the second mode and the second signal of the second mode indicates the number of second signals of the second mode associated with each random access resource of the second mode. Illustratively, in the heterogeneous network composed of VLC and RF, the association between the random access resource of the second mode and the second signal of the second mode indicates the number of visible light SSBs associated with each visible light RO. Illustratively, assume that there are 4 ROs, i.e., RO1, RO2, RO3, and RO4. If the association between the random access resource of the second mode and the second signal of the second mode indicates that each visible light RO is associated with one visible light SSB, referred to as RS for ease of description, then RS1 is mapped to RO1, RS2 is mapped to RO2, RS3 is mapped to RO3, and RS4 is mapped to RO4. If the association between the random access resource of the second mode and the second signal of the second mode indicates that each visible light RO is associated with 2 RSs, then RS1 and RS2 are mapped to RO1, RS3 and RS4 are mapped to RO2, RS1 and RS2 are mapped to RO3, and RS3 and RS4 are mapped to RO4. Here, a random access resource of the second mode may be mapped in a default order. In application, the number of second signals associated with each random access resource of the second mode may or may not be the same as the number of first signals associated with each random access resource of the first mode. When the number of second signals associated with each random access resource of the second mode is the same as the number of first signals associated with each random access resource of the first mode, to save signalling overhead, the configuration of the association between the random access resource of the second mode and the second signal of the second mode may be default, representing that by default the number of second signals associated with each random access resource of the second mode is the same as the number of first signals associated with each random access resource of the first mode.

The random access sequence of the second mode may or may not be the same as a random access sequence of the first mode in format. When a RO of the second mode is separate from a RO of the first mode, the first mode may already be distinguished from the second mode through the different ROs. Therefore, random access sequences of the same format may be configured for the first mode and the second mode. In this case, to reduce signalling overhead, configuration of the format of the random access sequence of the second mode may be default, representing that by default the random access sequence of the second mode is the same as the random access sequence of the first mode.

In application, the first information may be included in system information. Illustratively, in the heterogeneous network composed of VLC and RF, having demodulated an RF downlink PBCH, the terminal receives remaining minimum system information (i.e., SIB1) through the RF downlink, and acquires a configuration of an RF random access parameter and a configuration of a visible light random access parameter (i.e., the first information). The configuration of the RF random access parameter remains consistent with 5G new radio (NR), and includes a format of a random access sequence, a RO, an association between a random access resource and an SSB, etc.

Here, in application, for backward compatibility, the terminal may in addition be instructed whether the first access network device enables access of the second mode.

In view of this, in an embodiment, the method further includes an operation as follows.

Fourth information is sent to the terminal. The fourth information indicates whether access of the second mode is enabled.

In application, the fourth information is included in the PBCH.

The terminal may perform operation 402 when the fourth information indicates that access of the second mode is enabled.

Illustratively, in the heterogeneous network composed of VLC and RF, compared to a legacy 5G NR system, content carried in an SSB sent by the RF AP has to indicate in addition whether the RF AP enables visible light BS access. Specifically, one bit is set in a spare field of a 5G NR PBCH. Setting a value of the bit as 1 represents that the RF AP enables visible light BS access. Setting the value of the bit as 0 represents that the RF AP does not enable visible light BS access.

In application, in operation 402, the terminal determines whether to perform initial access of the second mode according to signal quality of a received second signal sent by at least one second access network device and the first information. Specifically, when signal quality, such as reference signal receiving power (RSRP), of each second signal is less than a first threshold (which may be set as needed), the terminal may perform the flow of random access of the first mode directly according to a configuration of a random access parameter of the first mode. When there is at least one second signal with signal quality greater than or equal to the first threshold, the terminal may perform initial access of the second mode based on a second signal with the best signal quality, thereby increasing an access success rate.

Having determined the best second signal, the terminal determines, based on the first information, the first random access resource to which the second signal of the second mode is mapped (i.e., a random access resource corresponding to the second signal with the best signal quality) and the corresponding sending beam, and sends, to the first access network device, the random access request information for requesting random access of the second mode.

Specifically, the terminal establishes, based on the first information, the mapping relation among the random access resource of the second mode, the second signal of the second mode, and the first signal of the first mode, and then determines the first random access resource to which the second signal of the second mode is mapped and the corresponding sending beam.

The mapping relation may be established in two modes as follows.

In mode 1, a mapping result is acquired by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode. Accordingly, the first random access resource and the corresponding sending beam are determined based on the mapping result.

In mode 2, a mapping result is acquired by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode. Accordingly, the first random access resource and the corresponding sending beam are determined based on the mapping result.

In application, the first access network device may inform the terminal of a mapping order, thereby enabling the terminal to perform mapping in one of the two mapping orders shown above.

In view of this, in an embodiment, the method further includes an operation as follows.

Fifth information sent by the first access network device is received. The fifth information may indicate that mapping according to the first mapping relation and mapping according to the second mapping relation are to be performed sequentially based on the first information, or that mapping according to the second mapping relation and mapping according to the first mapping relation are to be performed sequentially based on the first information.

Here, in application, the fifth information may be included in the system information. Illustratively, in the heterogeneous network composed of VLC and RF, the terminal acquires the fifth information through RF SIB1.

In embodiments of the disclosure, in a heterogeneous networking structure, the first random access resource to which the second signal of the second mode is mapped and the corresponding sending beam are determined based on the first information. The random access request information is sent on the first random access resource of the determined sending beam. In an operation mode supporting multiple beams, through an association between a random access resource and a first signal corresponding to a beam (where different transmission signals of the first signal may identify different beams), the terminal sends the random access request information on just a random access resource corresponding to a specific transmission signal of the first signal, thus implementing implicit report of downlink beam selection, while lowering the overhead of beam scan in a subsequent flow.

In an embodiment, the random access request information for requesting random access of the second mode includes the random access sequence of the second mode. Alternatively, the random access request information for requesting random access of the second mode includes the random access sequence of the second mode and a physical uplink shared channel (PUSCH) or a physical uplink control channel (PUCCH) associated with the random access sequence of the second mode.

In application, when the random access request information includes the random access sequence of the second mode and the PUSCH or the PUCCH associated with the random access sequence of the second mode, the first access network device may determine, based on at least the random access request information, a second access network device to be accessed by the terminal.

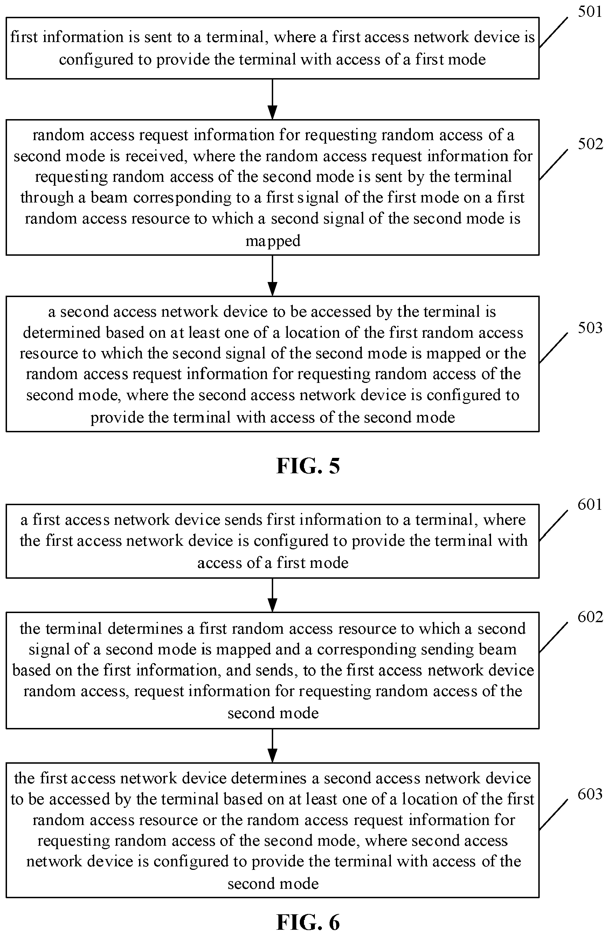

Accordingly, embodiments of the disclosure further provide a method for sending a resource. The method is implemented by a first access network device. As shown in FIG. 5, the method includes operations as follows.

In 501, first information is sent to a terminal. The first access network device is configured to provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode.

The first mode differs from the second mode.

The third information indicates an association between the random access resource of the second mode and the second signal of the second mode.

In 502, random access request information for requesting random access of a second mode is received. The random access request information for requesting random access of the second mode is sent by the terminal through a beam corresponding to the first signal of the first mode on a first random access resource to which the second signal of the second mode is mapped.

In 503, a second access network device to be accessed by the terminal is determined based on at least one of a location of the first random access resource to which the second signal of the second mode is mapped or the random access request information for requesting random access of the second mode. The second access network device is configured to provide the terminal with access of the second mode.

In an embodiment, the method further includes an operation as follows.

Fourth information is sent to the terminal. The fourth information indicates whether access of the second mode is enabled.

In application, in 503, the first access network device also is to establish, based on the first information, the mapping relation among the random access resource of the second mode, the second signal of the second mode, and the first signal of the first mode, and then determine the second access network device to be accessed by the terminal based on at least one of the location of the first random access resource or the random access request information, as well as the established mapping relation.

Similarly as for the terminal, the mapping relation may be established in two modes as follows.

In mode 1, a mapping result is acquired by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode. Accordingly, the second access network device to be accessed by the terminal is determined based on at least one of the location of the first random access resource or the random access request information for requesting random access of the second mode, and the mapping result.

In mode 2, a mapping result is acquired by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode. Accordingly, the second access network device to be accessed by the terminal is determined based on at least one of the location of the first random access resource or the random access request information for requesting random access of the second mode, and the mapping result.

In application, the first access network device may inform the terminal of a mapping order, thereby enabling the terminal to perform mapping in one of the two mapping orders shown above.

In view of this, in an embodiment, the method further includes an operation as follows.

Fifth information is sent to the terminal. The fifth information indicates that mapping according to the first mapping relation and mapping according to the second mapping relation are to be performed sequentially based on the first information, or that mapping according to the second mapping relation and mapping according to the first mapping relation are to be performed sequentially based on the first information.

Embodiments of the disclosure further provide a method for sending a resource. As shown in FIG. 6, the method includes operations as follows.

In 601, a first access network device sends first information to a terminal. The first access network device is configured to provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode.

The first mode differs from the second mode.

The third information indicates an association between the random access resource of the second mode and the second signal of the second mode.

In 602, having received the first information, the terminal determines a first random access resource to which the second signal of the second mode is mapped and a corresponding sending beam based on the first information, and sends, to the first access network device, random access request information for requesting random access of the second mode.

In 603, having received the random access request information, the first access network device determines a second access network device to be accessed by the terminal based on at least one of the location of the first random access resource or the random access request information. The second access network device is configured to provide the terminal with access of the second mode.

With the method for sending a resource according to embodiments of the disclosure, a first access network device sends first information to a terminal. The first access network device is configured to provide the terminal with access of a first mode. The first information includes at least one of second information, a configuration of a random access resource of a second mode, third information, or a format of a random access sequence of the second mode. The second information indicates an association between a first signal of the first mode and a second signal of the second mode. The first mode differs from the second mode. The third information indicates an association between the random access resource of the second mode and the second signal of the second mode. Having received the first information, the terminal determines a first random access resource to which the second signal of the second mode is mapped and a corresponding sending beam based on the first information, and sends, to the first access network device, random access request information for requesting random access of the second mode. Having received the random access request information, the first access network device determines a second access network device to be accessed by the terminal based on at least one of the location of the first random access resource or the random access request information. The second access network device is configured to provide the terminal with access of the second mode. With the solutions according to embodiments of the disclosure, an access network device of a first mode sends information to a terminal, enabling the terminal to establish a mapping relation among a random access resource of a second mode, a second signal of the second mode, and a first signal of the first mode, thereby enabling the terminal to select the random access resource of the second mode and a most suitable sending beam, and to send corresponding random access request information, thus enabling the access network device of the first mode to identify an access network device of the second mode the terminal is to access, as well as enabling reception using a most suitable uplink beam, thereby reducing an initial access delay, increasing an access flow rate.

The disclosure is further elaborated hereinafter with reference to application embodiments.

In an application embodiment, a heterogeneous network is composed of VLC and RF.

### Application embodiment 1

In the application embodiment, the configuration of the visible light random access parameter may include at least one of:
a mapping relation between an RF SSB and a visible light SSB, indicating which visible light SSB coverage (coverages) is (are) covered by the RF SSB;
information on a configuration of a time-frequency resource for visible light random access, indicating an RO;
an association between a visible light random access resource and a visible light SSB, indicating the number of SSBs associated with each RO; or
a format of a visible light random access sequence. The format of the visible light random access sequence may or may not be the same as a format of an RF random access sequence.

Information on a configuration of an optical random access parameter may be included in the SIB1.

A visible light RO is separate from an RF RO. Therefore, RF may be distinguished from visible light through the two different ROs, without having to configure random access sequences in different formats for RF and visible light.

Here, to further reduce SIB1 overhead, configuration of the format of the visible light random access sequence may be default, representing that by default the visible light random access sequence is the same as the RF random access sequence. In this case, the configuration may include the mapping relation between the RF SSB and the visible light SSB, the configuration of the time-frequency resource for visible light random access, and the association between the visible light random access resource and the visible light SSB.

Further, the association between the visible light random access resource and the visible light SSB may also be default, representing that the number of SSBs associated with each visible light RO is the same as the number of SSBs associated with each RF RO. Then, the configuration may include just the mapping relation between the RF SSB and the visible light SSB, as well as the configuration of the time-frequency resource for visible light random access.

Having demodulated the RF downlink PBCH, the terminal acquires the configuration of the RF random access parameter and the configuration of the visible light random access parameter through the SIB1. The configuration of the RF random access parameter may remain consistent with 5G NR, and includes the format of the random access sequence, the RO, the association between the random access resource and the SSB, etc.

Then, the terminal determines whether to perform initial access of a visible light BS according to signal quality of a received visible light SSB and the mapping relation between the RF SSB and the visible light SSB, specifically as follows.

If signal quality (such as RSRP) corresponding to each visible light BS is less than the first threshold, the terminal may perform the flow of RF random access directly according to the configuration of the RF random access parameter. Otherwise, the terminal may perform initial access based on a visible light SSB of the best signal quality among visible light SSBs mapped to an RF SSB, increasing the access success rate. Having determined the visible light SSB the terminal is to access and an RO associated with the visible light SSB, the terminal may send a corresponding random access sequence through an uplink beam corresponding to the RF SSB.

The RF BS may identify a visible light BS the terminal is to access according to a time-frequency location of the RO and an index of the random access sequence.

The terminal may establish a mapping relation among a visible light PRACH transmission resource, a visible light SSB, and an RF SSB according to the configured information, and determine, according to the established mapping relation, the RF SSB and the RO corresponding to the visible light SSB the terminal is to access.

Here, the configured information may include one of the following.

A visible light SSB is first mapped to a visible light RO, and then the visible light SSB is mapped to an RF SSB. That is, the mapping relation is established in the mode 1 (referred to hereinafter as mode A).

Alternatively, first, an RF SSB is mapped to a visible light SSB, and then, the visible light SSB is mapped to a visible light RO; or a visible light SSB is first mapped to an RF SSB, and then the visible light SSB is mapped to a visible light RO. That is, the mapping relation is established in the mode 2 (referred to hereinafter as mode B).

The solution according to the application embodiment is elaborated hereinafter with reference to examples.

### Example 1

In the example, the RF BS sends 4 SSBs, i.e., SSB0, SSB1, SSB2, and SSB3. Each visible light BS sends 1 SSB. There are a total of 4 visible light BSs, corresponding respectively to four cells, i.e., cell 0, cell 1, cell 2, and cell 3, with respective cell IDs ID0, ID1, ID2, and ID3. To be distinguished from an SSB sent by the RF BS, an SSB sent by a visible light BS may be referred to as an RS. The SSBs sent by the 4 visible light BSs may be RS0 (sent by visible light BS0), RS1 (sent by visible light BS1), RS2 (sent by visible light BS2), and RS3 (sent by visible light BS3), respectively.

Assume that the terminal searched and found SSB1 sent by the RF BS, as well as RS1 sent by the visible light BS1 and RS2 sent by the visible light BS2, acquires the cell ID of the RF BS by demodulating SSB1, and acquires the cell ID1 and the cell ID2 of the visible light BSs by demodulating RS1 and RS2, respectively.

The terminal may acquire the configuration of a random access parameter through the RF downlink. Assume that the acquired configuration includes that there are 4 ROs on RF time-domain, each RO mapping to one SSB, with a format-A random access sequence; and that there are 4 visible light ROs on visible light time-domain, each RO being associated with one RS, with a format-B visible light random access sequence. The mapping relation between the RF SSB and the visible light RS indicates that SSB0 corresponds to RS0, SSB1 corresponds to RS1, SSB2 corresponds to RS2, and SSB3 corresponds to RS3.

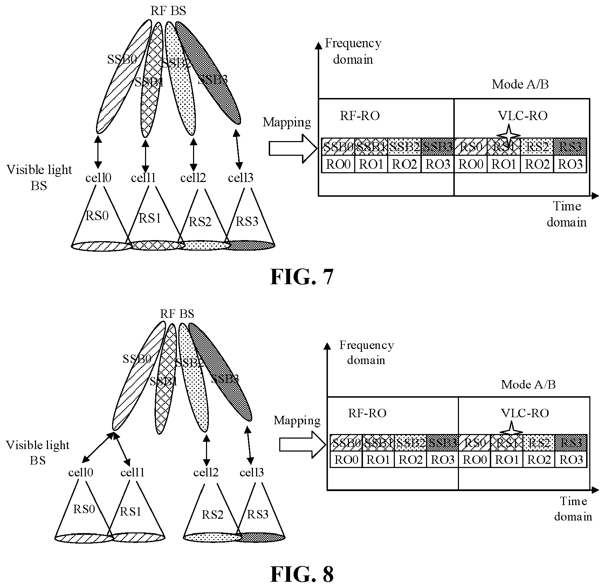

If the configuration indicates mapping according to mode A, then as shown in FIG. 7, the terminal first maps an RS to a visible light RO, resulting in {RS0-RO0}, {RS1-RO1}, {RS2-RO2}, and {RS3-RO3}; and then maps the RS to an SSB, resulting in SSB0{RS0-RO0}, SSB1{RS1-RO1}, SSB2{RS2-RO2}, and SSB3{RS3-RO3}.

If the configuration indicates mapping according to mode B, then as shown in FIG. 7, the terminal first maps an SSB to an RS, resulting in {SSB0-RS0}, {SSB1-RS1}, {SSB2-RS2}, and {SSB3-RS3}; and then maps the RS to a visible light RO, resulting in RO0{SSB0-RS0}, RO1{SSB1-RS1}, RO2{SSB2-RS2}, and RO3{SSB3-RS3}.

Assume that RS1 is better than RS2 in terms of signal quality. Then, the terminal selects to access the cell with ID1, i.e., cell 1. Then, the terminal sends any one random access sequence on RO1 through an uplink beam corresponding to an SSB1 downlink beam. The RF BS identifies visible light BS1 the terminal is to access according to the time-frequency location of RO1.

### Example 2

In the example, the RF BS sends 4 SSBs, i.e., SSB0, SSB1, SSB2, and SSB3. Each visible light BS sends 1 SSB. There are a total of 4 visible light BSs, corresponding respectively to four cells, i.e., cell 0, cell 1, cell 2, and cell 3, with respective cell IDs ID0, ID1, ID2, and ID3. To be distinguished from an SSB sent by the RF BS, an SSB sent by a visible light BS may be referred to as an RS. The SSBs sent by the 4 visible light BSs may be RS0 (sent by visible light BS0), RS1 (sent by visible light BS1), RS2 (sent by visible light BS2), and RS3 (sent by visible light BS3), respectively.

Assume that the terminal searched and found SSB1 sent by the RF BS, as well as RS0 sent by the visible light BS0 and RS1 sent by the visible light BS1, acquires the cell ID of the RF BS by demodulating SSB1, and acquires the cell ID0 and the cell ID1 of the visible light BSs by demodulating RS0 and RS1, respectively.

The terminal may acquire the configuration of a random access parameter through the RF downlink. Assume that the acquired configuration includes that there are 4 ROs on RF time-domain, and 4 visible light ROs on visible light time-domain, the RF ROs and the visible light ROs each being associated with one SSB/RS, with an RF random access sequence and a visible light random access sequence both in the format A. The mapping relation between the RF SSB and the visible light RS indicates that SSB0 corresponds to RS0 and RS1, SSB2 corresponds to RS2, and SSB3 corresponds to RS3.

If the configuration indicates mapping according to mode A, then as shown in FIG. 8, the terminal first maps an RS to a visible light RO, resulting in {RS0-RO0}, {RS1-RO1}, {RS2-RO2}, and {RS3-RO3}; and then maps the RS to an SSB, resulting in SSB0{RS0-RO0}, SSB0{RS1-RO1}, SSB2{RS2-RO2}, and SSB3{RS3-RO3}.

If the configuration indicates mapping according to mode B, then as shown in FIG. 8, the terminal first maps an SSB to an RS, resulting in {SSB0-RS0}, {SSB0-RS1}, {SSB2-RS2}, and {SSB3-RS3}; and then maps the RS to a visible light RO, resulting in RO0{SSB0-RS0}, RO1{SSB0-RS1}, RO2{SSB2-RS2}, and RO3{SSB3-RS3}.

Assume that RS1 is better than RS0 in terms of signal quality. Then, the terminal selects to access the cell with ID1, i.e., cell 1. Then, the terminal sends any one random access sequence on RO1 through an uplink beam corresponding to an SSB0 downlink beam. The RF BS identifies visible light BS1 the terminal is to access according to the time-frequency location of RO1.

As shown by the foregoing description, in example 1 and example 2, the number of RF SSBs and the number of visible light SSBs (i.e., the number of visible light BSs) are the same. Processing is the same when the two numbers differ, which is not repeated here.

Note that for mode A and mode B, the number of visible light ROs occupied may differ, depending on whether the number of RF SSBs and the number of visible light SSBs are the same.

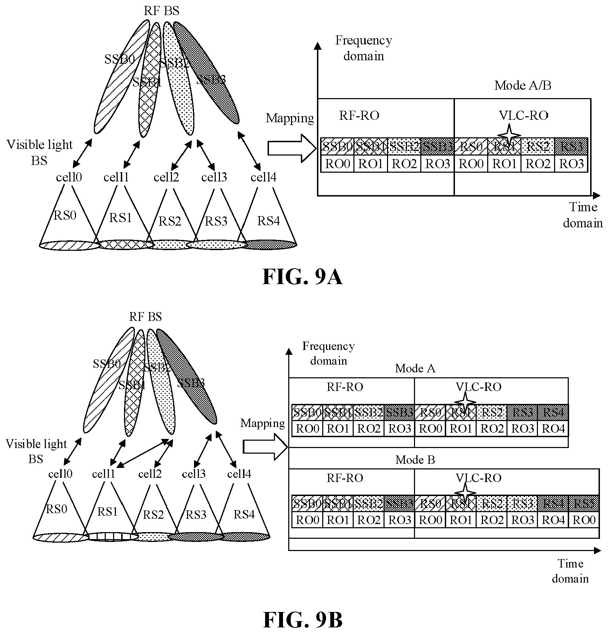

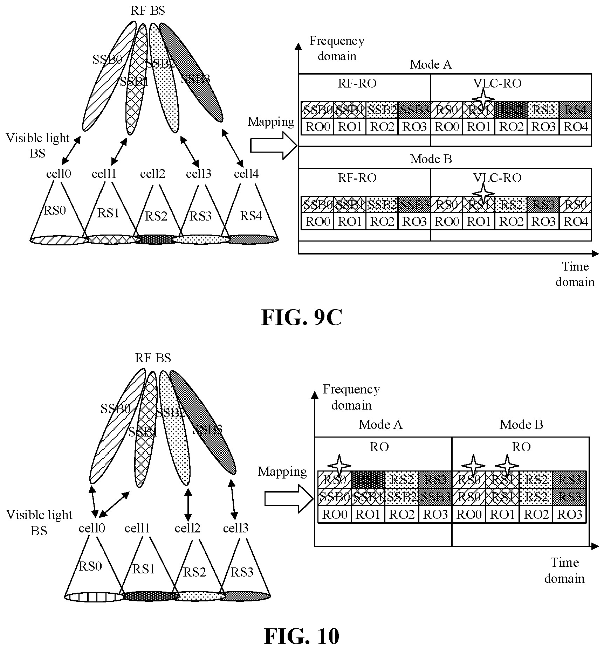

Illustratively, assume that the RF BS sends 4 SSBs, i.e., SSB0, SSB1, SSB2, and SSB3. Each visible light BS sends 1 SSB. There are a total of 5 visible light BSs, corresponding respectively to cell 0, cell 1, cell 2, cell 3, and cell 4, with respective cell IDs ID0, ID1, ID2, ID3, and ID4. Assume that there are 4 ROs on RF time-domain, and 5 visible light ROs on visible light time-domain, with the RF ROs and the visible light ROs each being associated with one SSB/RS, with an RF random access sequence and a visible light random access sequence both in the format A. FIG. 9A to FIG. 9C each are a diagram of a relation of the number of mapping relations between RF SSBs and visible light SSBs with the number of visible light BSs. As shown in FIG. 9A to FIG. 9C, when the number of mapping relations between the RF SSBs and the visible light SSBs equals the number of visible light BSs, the number of visible light ROs occupied in mode A and the number of visible light ROs occupied in mode B are the same. When the number of mapping relations between the RF SSBs and the visible light SSBs is greater than the number of visible light BSs, fewer visible light ROs are occupied in mode A. However, the number of visible light ROs occupied in mode A and the number of visible light ROs occupied in mode B may be made the same by limiting that one visible light SSB corresponds to one RF SSB. When the number of mapping relations between the RF SSBs and the visible light SSBs is less than the number of visible light BSs, fewer visible light ROs are occupied in mode B. Therefore, in application, it may be instructed, through a pass token, to establish the mapping relation between the RF SSB and the visible light SSB in mode B. In addition, to compress system information overhead, when one visible light SSB corresponds to multiple RF SSBs, one of the multiple RF SSBs may be selected.

### Application embodiment 2

Given that 5G NR RO design already occupies a lot of time-frequency resources, it may be difficult to reconfigure any new RO for visible light, and SIB1 overhead is large. Therefore, distinct from application embodiment 1, the configuration of the time-frequency resource for visible light random access in the configuration of the visible light random access parameter may be default, representing that by default the visible light RO is the same as the RF RO. In this case, the configuration of the visible light random access parameter may include the mapping relation between the RF SSB and the visible light SSB, the association between the visible light random access resource and the visible light SSB, and the format of the visible light random access sequence.

Having demodulated the RF downlink PBCH, the terminal acquires the configuration of the RF random access parameter and the configuration of the visible light random access parameter through the SIB1. The configuration of the RF random access parameter may remain consistent with 5G NR, and includes the format of the random access sequence, the RO, the association between the random access resource and the SSB, etc.

Then, the terminal determines whether to perform initial access of a visible light BS according to signal quality of a received visible light SSB and the mapping relation between the RF SSB and the visible light SSB. Specifically, if signal quality (such as RSRP) corresponding to each visible light BS is less than the first threshold, the terminal may perform the flow of RF random access directly according to the configuration of the RF random access parameter. Otherwise, the terminal may perform initial access based on a visible light SSB of the best signal quality among visible light SSBs mapped to an RF SSB, increasing the access success rate. Having determined the visible light SSB the terminal is to access and an RO associated with the visible light SSB, the terminal may send a corresponding random access sequence through an uplink beam corresponding to the RF SSB.

The RF BS may identify a visible light BS the terminal is to access according to a time-frequency location of the RO, the format of the random access sequence, and an index of the random access sequence.

It may be identified, through random access sequences in different formats, whether the terminal is to access a visible light BS or the RF BS. To further reduce SIB1 overhead, consider distinguishing the visible light BS from the RF BS through different indexes of random access sequences in the same format. That is, different indexes may be selected for the visible light BS and the RF BS, thereby distinguishing the visible light BS from the RF BS. Then, configuration of the format of the visible light random access sequence may be default, representing that by default the visible light random access sequence is the same as the RF random access sequence. In this case, the configuration of the visible light random access parameter may include the mapping relation between the RF SSB and the visible light SSB and the association between the visible light random access resource and the visible light SSB. Further, the association between the visible light random access resource and the visible light SSB may also be default, representing that the number of SSBs associated with each visible light RO is the same as the number of SSBs associated with each RF RO. In this case, the configuration of the visible light random access parameter may include just the mapping relation between the RF SSB and the visible light SSB. Accordingly, the RF BS may identify a visible light BS the terminal is to access according to a time-frequency location of the RO and a PUCCH/PUSCH associated with the random access sequence.

The terminal may establish a mapping relation among a visible light PRACH transmission resource, a visible light SSB, and an RF SSB according to the configured information, and determine, according to the established mapping relation, the RF SSB and the RO corresponding to the visible light SSB the terminal is to access.

Here, the configured information may include one of the following.

A visible light SSB is first mapped to a visible light RO, and then the visible light SSB is mapped to an RF SSB. That is, the mapping relation is established in the mode 1 (referred to hereinafter as mode A).

Alternatively, first, an RF SSB is mapped to a visible light SSB, and then, the visible light SSB is mapped to a visible light RO; or a visible light SSB is first mapped to an RF SSB, and then the visible light SSB is mapped to a visible light RO. That is, the mapping relation is established in the mode 2 (referred to hereinafter as mode B).

The solution according to the application embodiment is elaborated hereinafter with reference to examples.

### Example 1

In the example, the RF BS sends 4 SSBs, i.e., SSB0, SSB1, SSB2, and SSB3. Each visible light BS sends 1 SSB. There are a total of 4 visible light BSs, corresponding respectively to four cells, i.e., cell 0, cell 1, cell 2, and cell 3, with respective cell IDs ID0, ID1, ID2, and ID3. To be distinguished from an SSB sent by the RF BS, an SSB sent by a visible light BS may be referred to as an RS. The SSBs sent by the 4 visible light BSs may be RS0 (sent by visible light BS0), RS1 (sent by visible light BS1), RS2 (sent by visible light BS2), and RS3 (sent by visible light BS3), respectively.

Assume that the terminal searched and found SSB1 sent by the RF BS, as well as RS0 sent by the visible light BS0 and RS1 sent by the visible light BS1, acquires the cell ID of the RF BS by demodulating SSB1, and acquires the cell ID0 and the cell ID1 of the visible light BSs by demodulating RS0 and RS1, respectively.

The terminal may acquire the configuration of a random access parameter through the RF downlink. Assume that the acquired configuration includes that there are 4 ROs on RF and visible light time-domain, each RF RO mapping to one SSB, with a format-A RF random access sequence; and that each visible light RO is associated with one RS, with a format-B visible light random access sequence. The mapping relation between the RF SSBs and the visible light RSs indicates that SSB0 and SSB1 correspond to RS0, SSB2 corresponds to RS2, and SSB3 corresponds to RS3.

If the configuration indicates mapping according to mode A, then as shown in FIG. 10, the terminal first maps an RS to a visible light RO, resulting in {RS0-RO0}, {RS1-RO1}, {RS2-RO2}, and {RS3-RO3}; and then maps the RS to an SSB, resulting in SSB0{RS0-RO0}, SSB1{RS0-RO0}, XXX{RS1-RO1}, SSB2{RS2-RO2}, and SSB3{RS3-RO3}.

If the configuration indicates mapping according to mode B, then as shown in FIG. 10, the terminal first maps an SSB to an RS, resulting in {SSB0-RS0}, {SSB1-RS0}, {SSB2-RS2}, and {SSB3-RS3}; and then maps the RS to a visible light RO, resulting in RO0{SSB0-RS0}, R01{SSB1-RS0}, RO2{SSB2-RS2}, and RO3{SSB3-RS3}.

Assume that RS1 is better than RS0 in terms of signal quality. Then, given that RS1 corresponds to no uplink sending beam, the terminal selects to access the cell with ID0, i.e., cell 0.

Here, in case of mapping according to mode A, the terminal may perform sending through uplink beams corresponding to SSB0 and SSB1 on RO0. Given that the RF BS may have to receive a preamble of a 5G terminal at the same time, the terminal may select to send any one random access sequence in format B through an uplink beam corresponding to SSB0. In case of mapping according to mode B, the terminal may send the any one random access sequence in format B through the uplink beam corresponding to SSB0 on RO0, or through an uplink beam corresponding to SSB1 on RO1. The RF BS may identify, according to the time-frequency location of RO0 or RO1 and the format of the random access sequence, that the terminal is to access visible light BS0.

### Example 2

In the example, the RF BS sends 4 SSBs, i.e., SSB0, SSB1, SSB2, and SSB3. Each visible light BS sends 1 SSB. There are a total of 4 visible light BSs, corresponding respectively to four cells, i.e., cell 0, cell 1, cell 2, and cell 3, with respective cell IDs ID0, ID1, ID2, and ID3. To be distinguished from an SSB sent by the RF BS, an SSB sent by a visible light BS may be referred to as an RS. The SSBs sent by the 4 visible light BSs may be RS0 (sent by visible light BS0), RS1 (sent by visible light BS1), RS2 (sent by visible light BS2), and RS3 (sent by visible light BS3), respectively.

Assume that the terminal searched and found SSB1 sent by the RF BS, as well as RS0 sent by the visible light BS0 and RS1 sent by the visible light BS1, acquires the cell ID of the RF BS by demodulating SSB1, and acquires the cell ID0 and the cell ID1 of the visible light BSs by demodulating RS0 and RS1, respectively.

The terminal may acquire the configuration of a random access parameter through the RF downlink. Assume that the acquired configuration includes that there are 4 ROs on RF and visible light time-domain, each RO mapping to (i.e., being associated with) one SSB/RS, with an RF random access sequence and a visible light random access sequence both in the format A; and that the mapping relation between the RF SSB and the visible light RS indicates that SSB0 corresponds to RS0, SSB1 corresponds to RS1, SSB2 corresponds to RS1 and RS2, and SSB3 corresponds to RS3.

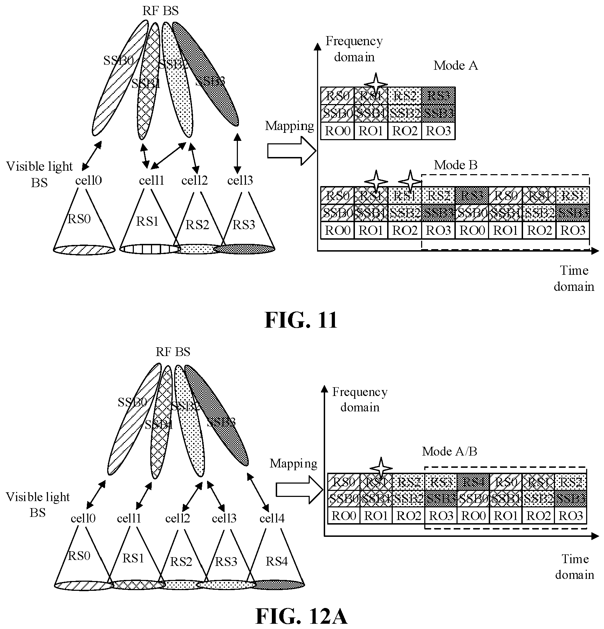

In this case, if the configuration indicates mapping according to mode A, then as shown in FIG. 11, the terminal first maps an RS to a visible light RO, resulting in {RS0-RO0}, {RS1-RO1}, {RS2-RO2}, and {RS3-RO3}; and then maps the RS to an SSB, resulting in SSB0{RS0-RO0}, SSB1{RS1-RO1}, SSB2{RS1-RO1}, SSB2{RS2-RO2}, and SSB3 {RS3-RO3}.

In this case, if the configuration indicates mapping according to mode B, then as shown in FIG. 11, the terminal first maps an SSB to an RS, resulting in {SSB0-RS0}, {SSB1-RS1}, {SSB2-RS1}, {SSB2-RS2}, and {SSB3-RS3}; and then maps the RS to a visible light RO, resulting in RO0{SSB0-RS0}, RO1{SSB1-RS1}, RO2{SSB2-RS1}, RO3{SSB2-RS2}, and RO4{SSB3-RS3}.

Assume that RS1 is better than RS0 in terms of signal quality. Then, the terminal selects to access the cell with ID1, i.e., cell 1.

In case of mapping according to mode A, the terminal may perform sending through uplink beams corresponding to SSB1 and SSB2 on RO1. Given that the RF BS may have to receive a preamble of a 5G terminal at the same time, the terminal may select to send any one random access sequence through an uplink beam corresponding to SSB1.

Here, for mapping according to mode B, the terminal may send the any one random access sequence through the uplink beam corresponding to SSB1 on RO1, or through an uplink beam corresponding to SSB2 on RO2. In this case, for another visible light RO, a visible light receiving beam differs from an RF receiving beam. Therefore, access by the terminal may fail no matter which beam is adopted by the BS. Therefore, mapping in this mode does not work.

The sent random access request information specifically includes two types of information as follows.

The first type of information that may be included in the random access request information is the visible light random access sequence.

Terminal-sent random access sequences associated with the RF SSB and with the visible light SSB may have different initial serial numbers. Assume a total of N sequences, N being an integer greater than or equal to 2. Then, on RO1, the RF SSB sequence may have an initial serial number 0, and the visible light RS sequence may have an initial serial number N/2. However, this mode reduces the number of terminals having access, and impacts a legacy terminal.

The RF BS may identify, according to the time-frequency location of RO1 and the index of the random access sequence, that the terminal is to access visible light BS1.

The second type of information that may be included in the random access request information is the visible light random access sequence and a PUSCH/PUCCH associated with the visible light random access sequence.

Terminal-sent random access sequences associated with the RF SSB and with the visible light SSB may have identical initial serial numbers. In this case, the terminal is to send a preamble and a PUSCH/PUCCH associated with the preamble. Content of the PUSCH/PUCCH may indicate, through a bitmap, whether the terminal is to access the RF BS or a visible light BS.

The RF BS may identify, according to the time-frequency location of RO1, the preamble, and the content of the PUSCH/PUCCH associated with the preamble, that the terminal is to access visible light BS1.

As shown in example 1 and example 2, the number of RF SSBs and the number of visible light SSBs (i.e., the number of visible light BSs) are the same. Processing is the same when the two numbers differ, which is not repeated here.

Note that for both mode A and mode B, when the number of RF SSBs and the number of visible light SSBs differ, in both mode A and mode B, a conflict between the sending beam corresponding to the RF preamble and the sending beam corresponding to the visible light preamble may occur on one RO, no matter how many mapping relations between the RF SSBs and the visible light SSBs there are, and access by some terminals may fail no matter which sending beam is adopted by the RF BS in reception.

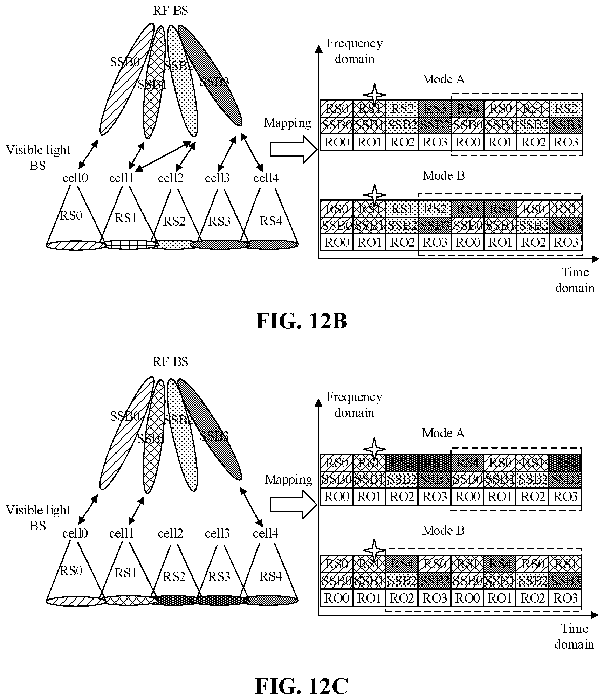

Illustratively, assume that the RF BS sends 4 SSBs, i.e., SSB0, SSB1, SSB2, and SSB3. Each visible light BS sends 1 SSB. There are a total of 5 visible light BSs, corresponding respectively to cell 0, cell 1, cell 2, cell 3, and cell 4, with respective cell IDs ID0, ID1, ID2, ID3, and ID4. Assume that there are 4 ROs on RF and visible light time-domain, and each RO for RF and visible light is associated with one SSB/RS, with an RF random access sequence being in the format A and a visible light random access sequence being in the format B. FIG. 12A to FIG. 12C each are a diagram of a relation of the number of mapping relations between the RF SSBs and the visible light SSBs with the number of visible light BSs. As shown in FIG. 12A to FIG. 12C, when the number of RF SSBs differs from the number of visible light SSBs, for both mode A and mode B, a conflict between the sending beam corresponding to the RF preamble and the sending beam corresponding to the visible light preamble may occur on one RO, no matter how many mapping relations between the RF SSBs and the visible light SSBs there are, and access by some terminals may fail no matter which sending beam is adopted by the RF BS in reception.

Therefore, when the number of visible light BSs equals the number of RF SSBs, the mapping relation between the RF SSB and the visible light SSB may be implemented by configuring mode A through signalling. In addition, to compress system information overhead, when one visible light SSB corresponds to multiple RF SSBs, one of the multiple RF SSBs may be selected with reference to a mapping relation between an RF SSB and an RF random access resource, guaranteeing that the RF SSB associated with one visible light RO is the RF SSB associated with the visible light SSB.

In an application embodiment of the disclosure, the RF link may be an uplink or downlink in a cellular network (4G/5G, etc.). By designing a method for sending a random access resource for heterogeneous networking with visible light, a mapping relation among a visible light PRACH transmission resource, a visible light SSB, and an RF SSB is established, thereby reducing a delay in accessing a visible light BS by a terminal, increasing an access flow rate.

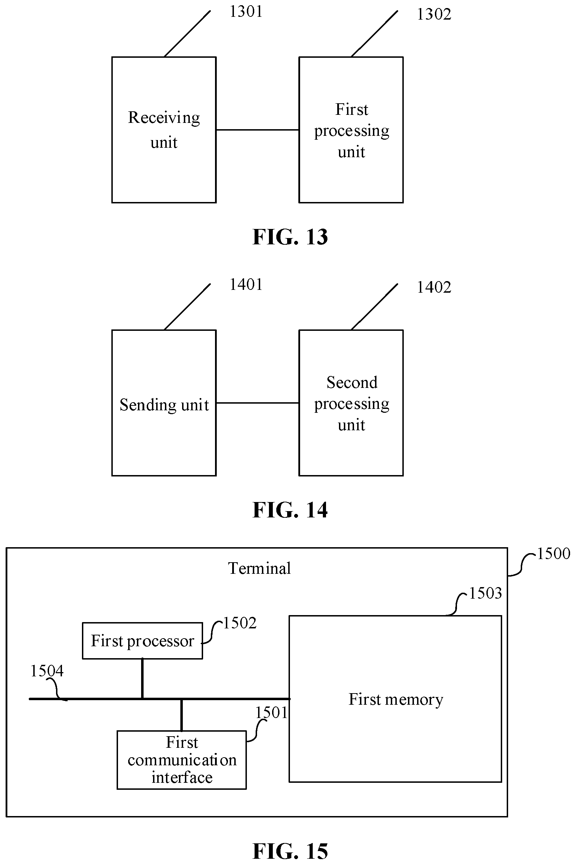

To implement a method at a terminal side according to embodiments of the disclosure, embodiments of the disclosure further provide an apparatus for sending a resource, provided on a terminal. As shown in FIG. 13, the apparatus may include a receiving unit and a first processing unit.

The receiving unit 1301 is configured to receive first information sent by a first access network device. The first access network device may provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode.

A second access network device may provide the terminal with access of the second mode. The first mode differs from the second mode.

The third information indicates an association between the random access resource of the second mode and the second signal of the second mode.

The first processing unit 1302 is configured to determine, based on the first information, a first random access resource to which the second signal of the second mode is mapped and a corresponding sending beam, and send, to the first access network device, random access request information for requesting random access of the second mode.

In an embodiment, the receiving unit 1301 is further configured to receive fourth information sent by the first access network device. The fourth information may indicate whether access of the second mode is enabled.

Accordingly, when the fourth information indicates that access of the second mode is enabled, the first processing unit 1302 may determine, based on the first information, the first random access resource to which the second signal of the second mode is mapped and the corresponding sending beam, and send, to the first access network device, the random access request information for requesting random access of the second mode.

In an embodiment, the first processing unit 1302 is configured to perform operations as follows.

The first processing unit is configured to acquire a mapping result by sequentially performing, based on the first information, mapping according to a first mapping relation and mapping according to a second mapping relation. The first mapping relation may be determined according to the third information and the configuration of the random access resource of the second mode. The first mapping relation may include a mapping relation between the second signal of the second mode and the random access resource of the second mode. The second mapping relation may be determined according to the second information. The second mapping relation may include a mapping relation between the second signal of the second mode and the first signal of the first mode.

The first processing unit is configured to determine, based on the mapping result, the first random access resource and the corresponding sending beam.

In an embodiment, the first processing unit 1302 is configured to perform operations as follows.

The first processing unit is configured to acquire a mapping result by sequentially performing, based on the first information, mapping according to a second mapping relation and mapping according to a first mapping relation. The first mapping relation may be determined according to the third information and the configuration of the random access resource of the second mode. The first mapping relation may include a mapping relation between the second signal of the second mode and the random access resource of the second mode. The second mapping relation may be determined according to the second information. The second mapping relation may include a mapping relation between the second signal of the second mode and the first signal of the first mode.

The first processing unit is configured to determine, based on the mapping result, the first random access resource and the corresponding sending beam.

In an embodiment, the receiving unit 1301 is further configured to receive fifth information sent by the first access network device. The fifth information may indicate that mapping according to the first mapping relation and mapping according to the second mapping relation are to be performed sequentially based on the first information, or that mapping according to the second mapping relation and mapping according to the first mapping relation are to be performed sequentially based on the first information.

In application, the receiving unit 1301 may be implemented by a communication interface in the apparatus for sending a resource. The first processing unit may be implemented by a processor and the communication interface in the apparatus for sending a resource.

To implement a method at a first access network device side according to embodiments of the disclosure, embodiments of the disclosure further provide an apparatus for sending a resource, provided on a first access network device. As shown in FIG. 14, the apparatus may include a sending unit and a second processing unit.

The sending unit 1401 is configured to send first information to a terminal. The first access network device may provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode.

The first mode differs from the second mode.

The third information indicates an association between the random access resource of the second mode and the second signal of the second mode.

The second processing unit 1402 is configured to: receive random access request information for requesting random access of a second mode, the random access request information for requesting random access of the second mode being sent by the terminal through a beam corresponding to a first signal of the first mode on a first random access resource to which a second signal of the second mode is mapped; and determine a second access network device to be accessed by the terminal based on at least one of a location of the first random access resource to which the second signal of the second mode is mapped or the random access request information for requesting random access of the second mode. The second access network device may provide the terminal with access of the second mode.

In an embodiment, the sending unit 1401 is configured to send fourth information to the terminal. The fourth information may indicate whether access of the second mode is enabled.

In an embodiment, the second processing unit 1402 is configured to perform operations as follows.

The second processing unit is configured to acquire a mapping result by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second processing unit is configured to determine the second access network device to be accessed by the terminal based on at least one of the location of the first random access resource or the random access request information for requesting random access of the second mode, and the mapping result.

In an embodiment, the second processing unit 1402 is configured to perform operations as follows.

The second processing unit is configured to acquire a mapping result by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second processing unit is configured to determine the second access network device to be accessed by the terminal based on at least one of the location of the first random access resource or the random access request information for requesting random access of the second mode, and the mapping result.

In an embodiment, the sending unit 1401 is configured to send fifth information to the terminal. The fifth information may indicate that mapping according to the first mapping relation and mapping according to the second mapping relation are to be performed sequentially based on the first information, or that mapping according to the second mapping relation and mapping according to the first mapping relation are to be performed sequentially based on the first information.

In application, the sending unit 1401 may be implemented by a communication interface in the apparatus for sending a resource. The second processing unit 1402 may be implemented by a processor and the communication interface in the apparatus for sending a resource.

Note that division of the program modules in transmitting information by an apparatus for transmitting information according to the embodiment is merely illustrative. In application, the processing may be allocated to be carried out by different program modules as needed. That is, an internal structure of the apparatus may be divided into different program modules for carrying out all or part of the processing. In addition, the apparatus for transmitting information according to a foregoing embodiment belongs to the same concept as a method for transmitting information. Refer to a method embodiment for implementation of the apparatus, which is not repeated here.

Based on hardware implementation of the program modules, and to implement the method at the terminal side according to embodiments of the disclosure, embodiments of the disclosure further provide a terminal. As shown in FIG. 15, the terminal 1500 may include a first communication interface, a first processor, and a first memory.

The first communication interface 1501 may exchange information with a first access network device and a second access network device.

The first processor 1502 may be connected to the first communication interface 1501 to exchange information with the first access network device and the second access network device, and may be configured to execute a computer program to perform the method according to one or more technical solutions at the terminal side.

The computer program may be stored on the first memory 1503.

Specifically, the first communication interface 1501 is configured to receive first information sent by the first access network device. The first access network device may provide the terminal 1500 with access of a first mode.

The first information includes at least one of second information, a configuration of a random access resource of a second mode, third information, or a format of a random access sequence of the second mode.

The second information indicates an association between a first signal of the first mode and a second signal of the second mode.

The second access network device may provide the terminal 1500 with access of the second mode. The first mode differs from the second mode.

The third information indicates an association between the random access resource of the second mode and the second signal of the second mode.

The first processor 1502 is configured to determine, based on the first information, a first random access resource to which the second signal of the second mode is mapped and a corresponding sending beam, and send, to the first access network device through the first communication interface, random access request information for requesting random access of the second mode.

In an embodiment, the first communication interface 1501 is further configured to receive fourth information sent by the first access network device. The fourth information may indicate whether access of the second mode is enabled.

Accordingly, when the fourth information indicates that access of the second mode is enabled, the first processor 1502 may determine, based on the first information, the first random access resource to which the second signal of the second mode is mapped and the corresponding sending beam, and send, to the first access network device through the first communication interface 1501, the random access request information for requesting random access of the second mode.

In an embodiment, the first processor 1502 is configured to perform operations as follows.

The first processor is configured to acquire a mapping result by sequentially performing, based on the first information, mapping according to a first mapping relation and mapping according to a second mapping relation. The first mapping relation may be determined according to the third information and the configuration of the random access resource of the second mode. The first mapping relation may include a mapping relation between the second signal of the second mode and the random access resource of the second mode. The second mapping relation may be determined according to the second information. The second mapping relation may include a mapping relation between the second signal of the second mode and the first signal of the first mode.

The first processor is configured to determine, based on the mapping result, the first random access resource and the corresponding sending beam.

In an embodiment, the first processor 1502 is configured to perform operations as follows.

The first processor is configured to acquire a mapping result by sequentially performing, based on the first information, mapping according to a second mapping relation and mapping according to a first mapping relation. The first mapping relation may be determined according to the third information and the configuration of the random access resource of the second mode. The first mapping relation may include a mapping relation between the second signal of the second mode and the random access resource of the second mode. The second mapping relation may be determined according to the second information. The second mapping relation may include a mapping relation between the second signal of the second mode and the first signal of the first mode.

The first processor is configured to determine, based on the mapping result, the first random access resource and the corresponding sending beam.

In an embodiment, the first communication interface 1501 is further configured to receive fifth information sent by the first access network device. The fifth information may indicate that mapping according to the first mapping relation and mapping according to the second mapping relation are to be performed sequentially based on the first information, or that mapping according to the second mapping relation and mapping according to the first mapping relation are to be performed sequentially based on the first information.

Note that any specific processing by the first processor 1502 and the first communication interface 1501 may be understood by referring to a foregoing method.

Of course, in application, various components in the terminal 1500 may be coupled together through a bus system 1504. Understandably, the bus system 1504 is configured to implement connection and communication among these components. In addition to a data bus, the bus system 1504 may further include a power bus, a control bus, and a status signal bus. However, for clarity of description, various buses are marked as the bus system 1504 in FIG. 15.

The first memory 1503 in embodiments of the disclosure is configured to store various types of data to support operation on the terminal 1500. Examples of these data include any computer programs configured to operate on the terminal 1500.

A method disclosed by embodiments of the disclosure may be applied to the first processor 1502, or implemented by the first processor 1502. The first processor 1502 may be an integrated circuit chip capable of signal processing. In implementation, an operation of a foregoing method may be carried out via an integrated logic circuit of hardware in the first processor 1502 or instructions in form of software. The first processor 1502 may be a general-purpose processor, a Digital Signal Processor (DSP), or another programmable logic device, a discrete gate, or a transistor logic device, a discrete hardware component, etc. The first processor 1502 may implement or execute various methods, operations, and logical block diagrams disclosed in embodiments of the disclosure. A general-purpose processor may be a microprocessor or any conventional processor, etc. An operation of a method disclosed with reference to embodiments of the disclosure may be directly embodied as being carried out by a hardware decoding processor, or by a combination of software modules and hardware in the decoding processor. A software module may be located in a storage medium. The storage medium may be located in the first memory 1503. The first processor 1502 may read information in the first memory 1503, and combine the information with hardware of the first processor to perform an operation of a foregoing method.

In an illustrative embodiment, the terminal 1500 may be implemented by one or more application specific integrated circuits (ASICs), digital signal processors (DSPs), programmable logic devices (PLDs), complex programmable logic devices (CPLDs), field-programmable gate arrays (FPGAs), general-purpose processors, controllers, micro controller units (MCUs), microprocessors, or other electronic components, to implement a foregoing method.

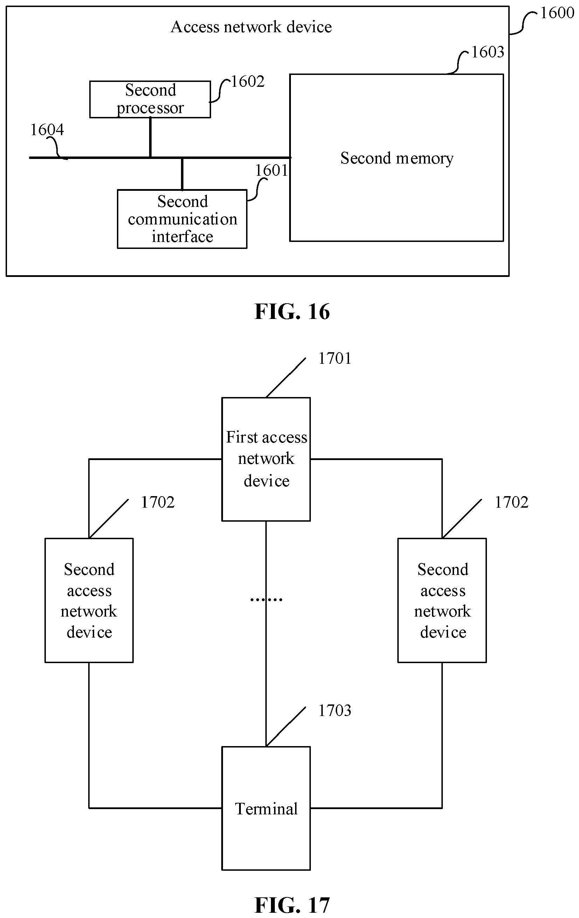

Based on hardware implementation of the program modules, and to implement the method at the first access network device side according to embodiments of the disclosure, embodiments of the disclosure further provide an access network device. As shown in FIG. 16, the access network device 1600 may include a second communication interface, a second processor, and a second memory.

The second communication interface 1601 may exchange information with a terminal and a second access network device.

The second processor 1602 may be connected to the second communication interface 1601 to exchange information with the terminal and the second access network device, and may be configured to execute a computer program to perform the method according to one or more technical solutions at the first access network device side.

The computer program may be stored on the second memory 1603.

Specifically, the second communication interface 1601 is configured to send first information to a terminal. The first access network device 1600 may provide the terminal with access of a first mode.

The first information includes at least one of second information, a configuration of a random access resource of a second mode, third information, or a format of a random access sequence of the second mode.

The second information indicates an association between a first signal of the first mode and a second signal of the second mode.

The first mode differs from the second mode.

The third information indicates an association between the random access resource of the second mode and the second signal of the second mode.

The second communication interface is configured to receive random access request information for requesting random access of a second mode. The random access request information for requesting random access of the second mode is sent by the terminal through a beam corresponding to a first signal of the first mode on a first random access resource to which a second signal of the second mode is mapped.

The second processor 1602 is configured to determine a second access network device to be accessed by the terminal based on at least one of a location of the first random access resource to which the second signal of the second mode is mapped or the random access request information for requesting random access of the second mode. The second access network device may provide the terminal with access of the second mode.

In an embodiment, the second communication interface 1601 is further configured to send fourth information to the terminal. The fourth information may indicate whether access of the second mode is enabled.

In an embodiment, the second processor 1602 is configured to perform operations as follows.

The second processor is configured to acquire a mapping result by sequentially performing, based on the first information, mapping according to a first mapping relation and mapping according to a second mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second processor is configured to determine the second access network device to be accessed by the terminal based on at least one of the location of the first random access resource or the random access request information for requesting random access of the second mode, and the mapping result.

In an embodiment, the second processor 1602 is configured to perform operations as follows.

The second processor is configured to acquire a mapping result by sequentially performing, based on the first information, mapping according to a second mapping relation and mapping according to a first mapping relation. The first mapping relation is determined according to the third information and the configuration of the random access resource of the second mode. The first mapping relation includes a mapping relation between the second signal of the second mode and the random access resource of the second mode. The second mapping relation is determined according to the second information. The second mapping relation includes a mapping relation between the second signal of the second mode and the first signal of the first mode.

The second processor is configured to determine the second access network device to be accessed by the terminal based on at least one of the location of the first random access resource or the random access request information for requesting random access of the second mode, and the mapping result.

In an embodiment, the second communication interface 1601 is configured to send fifth information to the terminal. The fifth information may indicate that mapping according to the first mapping relation and mapping according to the second mapping relation are to be performed sequentially based on the first information, or that mapping according to the second mapping relation and mapping according to the first mapping relation are to be performed sequentially based on the first information.

Note that any specific processing by the second processor 1602 and the second communication interface 1601 may be understood by referring to a foregoing method.

Of course, in application, various components in the access network device 1600 may be coupled together through a bus system 1604. Understandably, the bus system 1604 is configured to implement connection and communication among these components. In addition to a data bus, the bus system 1604 may further include a power bus, a control bus, and a status signal bus. However, for clarity of description, various buses are marked as the bus system 1604 in FIG. 16.

The second memory 1603 in embodiments of the disclosure is configured to store various types of data to support operation on the access network device 1600. Examples of these data include any computer programs configured to operate on the access network device 1600.

A method disclosed by embodiments of the disclosure may be applied to the second processor 1602, or implemented by the second processor 1602. The second processor 1602 may be an integrated circuit chip capable of signal processing. In implementation, an operation of a foregoing method may be carried out via an integrated logic circuit of hardware in the second processor 1602 or instructions in form of software. The second processor 1602 may be a general-purpose processor, a Digital Signal Processor (DSP), or another programmable logic device, a discrete gate, or a transistor logic device, a discrete hardware component, etc. The second processor 1602 may implement or execute various methods, operations, and logical block diagrams disclosed in embodiments of the disclosure. A general-purpose processor may be a microprocessor or any conventional processor, etc. An operation of a method disclosed with reference to embodiments of the disclosure may be directly embodied as being carried out by a hardware decoding processor, or by a combination of software modules and hardware in the decoding processor. A software module may be located in a storage medium. The storage medium may be located in the second memory 1603. The second processor 1602 may read information in the second memory 1603, and combine the information with hardware of the second processor to perform an operation of a foregoing method.

In an illustrative embodiment, the access network device 1600 may be implemented by one or more application specific integrated circuits (ASICs), digital signal processors (DSPs), programmable logic devices (PLDs), complex programmable logic devices (CPLDs), field-programmable gate arrays (FPGAs), general-purpose processors, controllers, micro controller units (MCUs), microprocessors, or other electronic components, to implement a foregoing method.

Note that a memory (the first memory 1503, the second memory 1603) according to embodiments of the disclosure may be a volatile and/or a non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc (CD), or a compact disc read-only memory (CD-ROM). The magnetic surface memory may be a disk storage or a tape storage. The volatile memory may be a random access memory (RAM) serving as an external cache. By way of illustration instead of restrictive description, there are many forms of RAMs available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), a direct rambus random access memory (DRRAM), etc. A memory described in embodiments of the disclosure is intended to include, but is not limited to, these and any other memories of suitable types.

To implement the method according to embodiments of the disclosure, embodiments of the disclosure further provide a system for sending a resource. As shown in FIG. 17, the system may include a first access network device 1701, at least one second access network device 1702, and a terminal 1703.

Here, note that any specific processing processes by the first access network device 1701 and the terminal 1703 are as elaborated above, and are not repeated here.

In an illustrative embodiment, embodiments of the disclosure further provide a storage medium, i.e, a computer storage medium, specifically a computer-readable storage medium, including the first memory 1503 storing a computer program, for example. The computer program may be executed by the first processor 1502 of the terminal 1500 to perform the operations of a foregoing method at the terminal side. As another example, the storage medium includes the second memory 1603 storing a computer program. The computer program may be executed by the second processor 1602 of the access network device 1600 to perform the operations of a foregoing method at the first access network device side. The computer-readable storage medium may be a memory such as a FRAM, a ROM, a PROM, an EPROM, an EEPROM, a flash memory, a magnetic surface memory, a CD, or a CD-ROM, etc.

Note that "first", "second", etc., are used just for differentiating similar objects, instead of denoting any specific order.

In addition, solutions according to embodiments of the disclosure may be combined with each other as needed as long as no conflict results from the combination.

What described are merely embodiments of the disclosure, and is not intended to limit the scope of the disclosure.

## Claims

1. A method for sending a resource, implemented by a terminal, the method comprising:
receiving first information sent by a first access network device, the first access network device being configured to provide the terminal with access of a first mode; and
determining, based on the first information, a first random access resource to which a second signal of a second mode is mapped and a corresponding sending beam, and sending, to the first access network device, random access request information for requesting random access of the second mode,
wherein the first information comprises at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

2. The method of claim 1, wherein the access of the first mode comprises radio frequency (RF) access.

3. The method of claim 2, wherein the access of the second mode comprises optical communication access.

4. The method of claim 1, wherein determining, based on the first information, the first random access resource to which the second signal of the second mode is mapped and the corresponding sending beam comprises:
acquiring a mapping result by sequentially performing, based on the first information, mapping according to a first mapping relation and mapping according to a second mapping relation, the first mapping relation being determined according to the third information and the configuration of the random access resource of the second mode, the first mapping relation comprising a mapping relation between the second signal of the second mode and the random access resource of the second mode, the second mapping relation being determined according to the second information, the second mapping relation comprising a mapping relation between the second signal of the second mode and the first signal of the first mode; and
determining, based on the mapping result, the first random access resource and the corresponding sending beam.

5. The method of claim 1, wherein determining, based on the first information, the first random access resource to which the second signal of the second mode is mapped and the corresponding sending beam comprises:
acquiring a mapping result by sequentially performing, based on the first information, mapping according to a second mapping relation and mapping according to a first mapping relation, the first mapping relation being determined according to the third information and the configuration of the random access resource of the second mode, the first mapping relation comprising a mapping relation between the second signal of the second mode and the random access resource of the second mode, the second mapping relation being determined according to the second information, the second mapping relation comprising a mapping relation between the second signal of the second mode and the first signal of the first mode; and
determining, based on the mapping result, the first random access resource and the corresponding sending beam.

6. The method of claim 1, wherein when one second signal of the second mode is enabled to correspond to at least two first signals of the first mode, the association between the first signal of the first mode and the second signal of the second mode as indicated by the second information indicates that the one second signal of the second mode corresponds to just one first signal of the first mode.

7. The method of any one of claims 1 to 6, wherein the random access request information for requesting random access of the second mode comprises:
the random access sequence of the second mode; or
the random access sequence of the second mode and a physical uplink shared channel (PUSCH) or a physical uplink control channel (PUCCH) associated with the random access sequence of the second mode.

8. The method of any one of claims 1 to 6, further comprising:
receiving fourth information sent by the first access network device, the fourth information indicating whether the access of the second mode is enabled,
wherein determining, based on the first information, the first random access resource to which the second signal of the second mode is mapped and the corresponding sending beam, and sending, to the first access network device, the random access request information for requesting random access of the second mode comprises:
in response to the fourth information indicating that the access of the second mode is enabled, determining, based on the first information, the first random access resource to which the second signal of the second mode is mapped and the corresponding sending beam, and sending, to the first access network device, the random access request information for requesting random access of the second mode.

9. A method for sending a resource, implemented by a first access network device, comprising:
sending first information to a terminal, the first access network device being configured to provide the terminal with access of a first mode;
receiving random access request information for requesting random access of a second mode, the random access request information for requesting random access of the second mode being sent by the terminal through a beam corresponding to a first signal of the first mode on a first random access resource to which a second signal of the second mode is mapped; and
determining a second access network device to be accessed by the terminal based on at least one of a location of the first random access resource to which the second signal of the second mode is mapped or the random access request information for requesting random access of the second mode, the second access network device being configured to provide the terminal with access of the second mode,
wherein the first information comprises at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

10. The method of claim 9, wherein the access of the first mode comprises radio frequency (RF) access.

11. The method of claim 10, wherein the access of the second mode comprises optical communication access.

12. The method of claim 9, wherein determining the second access network device to be accessed by the terminal based on at least one of the location of the first random access resource to which the second signal of the second mode is mapped or the random access request information for requesting random access of the second mode comprises:
acquiring a mapping result by sequentially performing, based on the first information, mapping according to a first mapping relation and mapping according to a second mapping relation, the first mapping relation being determined according to the third information and the configuration of the random access resource of the second mode, the first mapping relation comprising a mapping relation between the second signal of the second mode and the random access resource of the second mode, the second mapping relation being determined according to the second information, the second mapping relation comprising a mapping relation between the second signal of the second mode and the first signal of the first mode; and
determining the second access network device to be accessed by the terminal based on at least one of the location of the first random access resource or the random access request information for requesting random access of the second mode, and the mapping result.

13. The method of claim 9, wherein determining the second access network device to be accessed by the terminal based on at least one of the location of the first random access resource to which the second signal of the second mode is mapped or the random access request information for requesting random access of the second mode comprises:
acquiring a mapping result by sequentially performing, based on the first information, mapping according to a second mapping relation and mapping according to a first mapping relation, the first mapping relation being determined according to the third information and the configuration of the random access resource of the second mode, the first mapping relation comprising a mapping relation between the second signal of the second mode and the random access resource of the second mode, the second mapping relation being determined according to the second information, the second mapping relation comprising a mapping relation between the second signal of the second mode and the first signal of the first mode; and
determining the second access network device to be accessed by the terminal based on at least one of the location of the first random access resource or the random access request information for requesting random access of the second mode, and the mapping result.

14. The method of claim 9, wherein when one second signal of the second mode is enabled to correspond to at least two first signals of the first mode, the association between the first signal of the first mode and the second signal of the second mode as indicated by the second information indicates that the one second signal of the second mode corresponds to just one first signal of the first mode.

15. The method of any one of claims 9 to 14, wherein the random access request information for requesting random access of the second mode comprises:
the random access sequence of the second mode; or
the random access sequence of the second mode and a physical uplink shared channel (PUSCH) or a physical uplink control channel (PUCCH) associated with the random access sequence of the second mode.

16. The method of any one of claims 9 to 14, further comprising:
sending fourth information to the terminal, the fourth information indicating whether the access of the second mode is enabled.

17. An apparatus for sending a resource, comprising a receiving unit and a first processing unit,
wherein the receiving unit is configured to receive first information sent by a first access network device, the first access network device being configured to provide the terminal with access of a first mode,
wherein the first processing unit is configured to determine, based on the first information, a first random access resource to which a second signal of a second mode is mapped and a corresponding sending beam, and send, to the first access network device, random access request information for requesting random access of the second mode,
wherein the first information comprises at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

18. An apparatus for sending a resource, provided on a first access network device, and comprising a sending unit and a second processing unit,
wherein the sending unit is configured to send first information to a terminal, the first access network device being configured to provide the terminal with access of a first mode,
wherein the second processing unit is configured to receive random access request information for requesting random access of a second mode, the random access request information for requesting random access of the second mode being sent by the terminal through a beam corresponding to a first signal of the first mode on a first random access resource to which a second signal of the second mode is mapped; and determine a second access network device to be accessed by the terminal based on at least one of a location of the first random access resource to which the second signal of the second mode is mapped or the random access request information for requesting random access of the second mode, the second access network device being configured to provide the terminal with access of the second mode,
wherein the first information comprises at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

19. A terminal, comprising a first processor and a first communication interface,
wherein the first communication interface is configured to receive first information sent by a first access network device, the first access network device being configured to provide the terminal with access of a first mode,
wherein the first processor is configured to determine, based on the first information, a first random access resource to which a second signal of a second mode is mapped and a corresponding sending beam, and send, to the first access network device through the first communication interface, random access request information for requesting random access of the second mode,
wherein the first information comprises at least one of:
second information, the second information indicating an association between a first signal of the first mode and the second signal of the second mode, a second access network device being configured to provide the terminal with access of the second mode, the first mode differing from the second mode;
a configuration of a random access resource of the second mode;
third information, the third information indicating an association between the random access resource of the second mode and the second signal of the second mode; or
a format of a random access sequence of the second mode.

20. An access network device, comprising a second processor and a second communication interface,
wherein the second communication interface is configured to send first information to a terminal, and receive random access request information for requesting random access of a second mode, the random access request information for requesting random access of the second mode being sent by the terminal through a beam corresponding to a first signal of a first mode on a first random access resource to which a second signal of the second mode is mapped, the access network device being configured to provide the terminal with access of the first mode,
wherein the second processor is configured to determine a second access network device to be accessed by the terminal based on at least one of a location of the first random access resource to which the second signal of the second mode is mapped or the random access request information for requesting random access of the second mode, the second access network device being configured to provide the terminal with access of the second mode,
wherein the first information comprises at least one of:
second information, the second information indicating an association between the first signal of the first mode and the second signal of the second mode, the first mode differing from the second mode;
a configuration of a random access resource of the second mode;
third information, the third information indicating an association between the random access resource of the second mode and the second signal of the second mode; or
a format of a random access sequence of the second mode.

21. A terminal, comprising a first processor and a first memory storing a computer program executable by a processor,
wherein the first processor is configured to implement operations of the method of any one of claims 1 to 8 when executing the computer program.

22. An access network device, comprising a second processor and a second memory storing a computer program executable by a processor,
wherein the second processor is configured to implement operations of the method of any one of claims 9 to 16 when executing the computer program.

23. A storage medium, having stored thereon a computer program which, when executed by a processor, causes the processor to perform operations of the method of any one of claims 1 to 8, or operations of the method of any one of claims 9 to 16.
